Europäisches Patentamt

European Patent Office

Office européen des brevets

(19)

(11)  EP 1 054 196 B1

(12)  **EUROPÄISCHE PATENTSCHRIFT**

(45) Veröffentlichungstag und Bekanntmachung des Hinweises auf die Patenterteilung:
**01.03.2006   Patentblatt 2006/09**

(51) Int Cl.:
*F16J 15/34* *(2006.01)*

(21) Anmeldenummer: **00109984.5**

(22) Anmeldetag: **11.05.2000**

(54) **Gleitringdichtungsanordnung**

Mechanical seal arrangement

Garniture mécanique d'étanchéité

(84) Benannte Vertragsstaaten:
**AT BE CH CY DE DK ES FI FR GB GR IE IT LI LU MC NL PT SE**

(30) Priorität: **20.05.1999   DE 29908918 U**

(43) Veröffentlichungstag der Anmeldung:
**22.11.2000   Patentblatt 2000/47**

(73) Patentinhaber: **Burgmann Dichtungswerke GmbH & Co. KG**
**82515 Wolfratshausen (DE)**

(72) Erfinder:
• **Feigl, Peter**
**82335 Höhenrain (DE)**

• **Plewnia, Bernd**
**82538 Geretsried (DE)**

(74) Vertreter: **Schmidt, Horst**
**Patentanwalt**
**Postfach 44 01 20**
**80750 München (DE)**

(56) Entgegenhaltungen:
**DE-A- 3 901 362        DE-U- 29 810 759**
**US-A- 3 640 541        US-A- 4 212 475**
**US-A- 5 893 564**

**EP 1 054 196 B1**

**Beschreibung**

Die Erfindung betrifft eine Gleitringdichtungsanordnung gemäss dem Oberbegriff des Anspruchs 1. Eine derartige Gleitringdichtungsanordnung ist grundsätzlich aus der DE 298 10 759 U1 bekannt.

Die Erfindung betrifft insbesondere eine Gleitringdichtungsanordnung, die für die Abdichtung der Antriebswelle eines Ladeverdichters einer Brennkraftmaschine gegenüber einem Verdichtergehäuse geeignet ist. Für die Abdichtung der Antriebswelle z.B. eines turbomechanisch angetriebenen Kreisel- oder Schraubenspindelverdichters oder Turboverdichters mit Abgasturbinenantrieb erfordern die besonderen Betriebsbedingungen entsprechende Beachtung. So weisen die Antriebswellen in der Regel einen geringen Durchmesser von häufig wesentlich weniger als 40 mm auf, und werden diese Wellen mit sehr hohen Drehzahlen von z.B. $10^5$ min $^{-1}$ und mehr in Drehung versetzt. Die Dichtung kann seitens des Inneren des Verdichtergehäuses sowohl Über- als auch Unterdruckbedingungen ausgesetzt sein, und ferner sollte gewährleistet sein, dass das abzudichtende gasförmige Medium, bei dem es sich in der Regel um Luft handelt, weitestgehend frei von nicht-gasförmigen Bestandteilen, wie Ölpartikel, gehalten wird. Ölpartikel können in einem Lagerraum für Rollenlager oder dgl. zur Abstützung der Welle enthalten sein, der ausserhalb des Verdichtergehäuses angeordnet ist und den Raum darstellt, gegenüber dem das Innere des Ladeverdichters abgedichtet werden soll. In Anbetracht der kritischen Betriebsbedingungen kamen bislang bevorzugt für derartige Anwendungsgebiete Labyrinthdichtungen zur Anwendung, die jedoch den Nachteil einer hohen Leckage haben. Andererseits wurde der Einsatz von Gleitringdichtungsanordnungen trotz deren verringerter Leckage kaum in Erwägung gezogen, da bei bekannten Gleitringdichtungsanordnungen die Gefahr des Trockenlaufes besteht und in Verbindung mit den hohen Wellendrehzahlen dabei eine so starke Erwärmung an den Gleitringen zu erwarten ist, dass dies zu einem vorzeitigen Versagen der Dichtung führen würde. Ein weiterer Umstand, der dem Einsatz solcher Dichtungen bislang entgegenstand, war, dass in dem erwähnten Umgebungsfeld die Gefahr bestand, dass nicht-gasförmige in den Dichtspalt gelangen konnten, was zu Schäden an den Dichtflächen mit der Folge führen kann, dass die Leckage vergrössert wird.

Der Erfindung liegt die Aufgabe zugrunde, eine Gleitringdichtungsanordnung der eingangs erwähnten Gattung mit minimierter Gefahr des Trockenlaufes und verringerten Leckageverlusten infolge reduzierter Gefahr von Betriebsstörungen zu schaffen.

Diese Aufgabe wird erfindungsgemäss durch die Merkmale im kennzeichnenden Teil des Anspruches 1 gelöst. Ein Ausgangspunkt der Erfindung ist, dass die gasförderwirksamen Ausnehmungen in der Gleitfläche eines der Gleitringe in einer solchen Anzahl vorhanden sind, dass die davon eingenommene Fläche etwa 35 bis 65 % der Gesamtfläche der Gleitfläche ausmacht. Dies bedeutet, dass nicht nur eine sehr hohe Anzahl an förderwirksamen Ausnehmungen in der Gleitfläche vorgesehen ist, sondern die ausnehmungsfreien Bereiche der Gleitfläche auf ein Minimum reduziert sind. So kann das Verhältnis der radialen Abmessung eines ausnehmungsfreien Dammbereiches zu den radialen Abmessungen der Gleitfläche nur etwa 0,2 bis 0,3 betragen. Dadurch wird sichergestellt, dass bei allen Betriebszuständen zwischen den zusammenwirkenden Gleitflächen ein ausreichend stabiles Gaspolster gebildet wird, uzw. auch dann, wenn seitens des abzudichtenden Mediums (Luft) ein Unterdruck auf die Gleitringdichtungsanordnung einwirkt. Gemäss einer bevorzugten Weiterbildung der Erfindung sollte ferner das Belastungsverhältnis k, definiert als das Verhältnis einer hydraulisch durch den Druck des abzudichtenden Mediums belasteten Wirkfläche der Gleitringdichtungsanordnung zur Gesamtfläche der Gleitfläche in einem Bereich zwischen 0,5 und 1,2 liegen, wobei bei einem Unterdruck des abzudichtenden Mediums k im unteren Teil dieses Bereiches und bei einem Überdruck im oberen Teil angelegt werden sollte. Es sind ferner Massnahmen vorgesehen, die verhindern, dass keine von nicht-gasförmigen Bestandteilen durchsetzte Gase von der Aussenumgebung in den abzudichtenden Raum gelangen was Betriebsstörungen der Gleitringdichtungsanordnung zur Folge haben könnte. Dies wird einerseits dadurch erreicht, dass die gasförderwirksamen Ausnehmungen ihren Ausgang am inneren Umfang der Gleitfläche nehmen, so dass eine Leckageströmung stets aus dem abzudichtenden Raum in die Aussenumgebung und nicht umgekehrt stattfindet. Andererseits wird dieser Aspekt erfindungsgemäss weiter dadurch wesentlich unterstützt, dass eine Einrichtung aufstromseitig der dem abzudichtenden Medium abgewandten Seite der Gleitringdichtungsanordnung vorgesehen ist, welche unter Ausnutzung der herrschenden Zentrifugalkräfte wirksam und mit einfachen baulichen Mittels den Zutritt von nicht-gasförmigen Bestandteilen zum Dichtspalt verhindern oder wenigstens wesentlich einschränken kann. Zwar sind Öl-Zurückhaltungseinrichtungen bei Gleitringdichtungen grundsätzlich bekannt (US 5 503 407 A), doch beruhen diese auf einfache Abschirmung des Dichtungsbereich gegenüber der Umgebung mittels z.B. so-genannter Windbacks, die in Gegenwart von Gasen praktisch unwirksam sind.

Die Erfindung wird nachfolgend anhand einer Ausführungsform und der Zeichnung näher erläutert. Es zeigen:

Fig. 1   in längsgeschnittener Ansicht eine Gleitringdichtungsanordnung nach der Erfindung nach Einbau in einer Wellendurchführungsbohrung eines Verdichtergehäuses, und

Fig. 2   in Draufsicht die Gleitfläche eines der Gleitringe der Gleitringdichtungsanordnung nach Fig. 1.

Obschon die Erfindung nachfolgend in Verbindung mit der Abdichtung der Antriebswelle eines Ladeverdichters

2

für Brennkraftmaschinen beschrieben wird, versteht es sich, dass die Erfindung auf dieses Einsatzgebiet nicht beschränkt ist. Die Erfindung kann vielmehr vorteilhaft immer dann eingesetzt werden, wenn eine mit hoher Drehzahl betriebene Welle mit vergleichsweise geringem Durchmesser in reibungsminimierender Weise gegenüber einem Gehäuse abgedichtet werden soll und das abzudichtende Medium ein Gas, wie Luft, ist. Die Erfindung bietet jedoch auch Vorteile für die Abdichtung von mit relativ niedriger Drehzahl drehenden Wellen mit grossem Durchmesser von Aggregaten, in denen Unterdruckbedingungen herrschen, z.B. Getrieben von schweren Dieseltriebwerken.

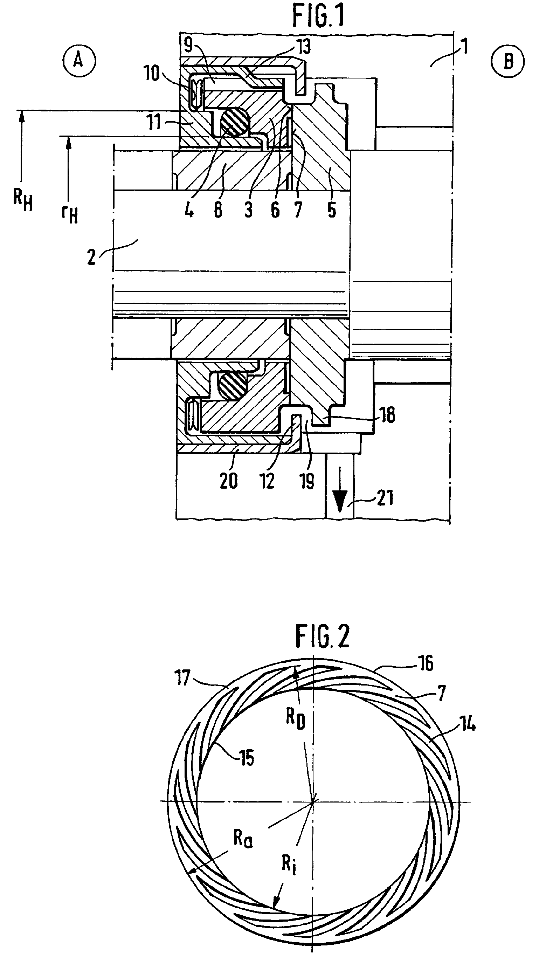

Die Gleitringdichtungsanordnung nach der Erfindung umfasst einen an einem Gehäuse 1 (in der Zeichnung schematisch angedeutet) drehgesichert, jedoch axial beweglich, koaxial zu einer Welle 2 gehaltenen Gleitring 3 und einen auf der Welle 2 zur gemeinsamen Drehung mit dieser angeordneten Gleitring 5. Die Gleitringe 3, 5 haben im wesentlichen radiale, einander gegenüberliegende Gleitflächen 6, 7. In wenigstens einer der Gleitflächen 6, 7, vorzugsweise in der Gleitfläche 7 des drehfesten Gleitringes 3, sind drehrichtungsabhängige gasförderwirksame Strukturen oder Ausnehmungen 14, vgl. Fig. 2, durch bekannte Techniken, wie Schleifen, Lasern oder Prägen, eingebracht. Die gasförderwirksame Ausnehmungen 14 bewirken, dass bei Drehung der Welle 2 ein Gas zwischen die Gleitflächen 6, 7 gepumpt und dadurch zwischen diesen ein Druck aufgebaut wird, der unter Trennung der Gleitflächen 6, 7 dazwischen ein Gaspolster bildet, um einen Raum oder Bereich A innenumfänglich gegenüber einem Raum oder Bereich B aussenumfänglich der Gleitflächen 6, 7 abzudichten. Derartige gasförderwirksame Ausnehmungen 14 sind grundsätzlich bekannt. Bezüglich näherer Details zu deren Aufbau kann z.B. auf BURGMANN, Gasgeschmierte Gleitringdichtungen, 1997, Selbstverlag, S. 16 ff. ISBN 3-929682-15-X verwiesen werden. Es können drehrichtungsabhängige gasförderwirksame Ausnehmungen unterschiedlicher Ausbildung vorgesehen werden.

Der drehfeste Gleitring 3 ist in einem am Verdichtergehäuse 1 in nicht gezeigter Weise stationär montierten Mitnehmergehäuse 11 aufgenommen und dagegen durch eine Sekundärdichtung 4 in Gestalt eines O-Ringes abgedichtet. Bezüglich näherer Details zu einer derartigen O-Ring-Sekundärdichtung einschl. dafür geeigneter Werkstoffe sowie alternativer Formen von Sekundärdichtungen kann auf BURGMANN, ABC der Gleitringdichtung, 1988, Selbstverlag, S. 161, 272-273, verwiesen werden.

Zwischen dem Mitnehmergehäuse 11 und dem drehfesten Gleitring 3 wirkt eine Federvorspanneinrichtung 10, bei der es sich um eine Wellfederanordnung handeln kann, wie dies in Fig. 1 gezeigt ist. Die Federvorspanneinrichtung 10 bewirkt, dass der drehfeste Gleitring 3 gegen den mit der Welle 2 rotierenden Gleitring 5 mit einer geeigneten Vorspannkraft beaufschlagt ist, so dass bei Stillstand der Welle 2 die Gleitflächen 6, 7 der Gleitringe 3, 5 in dichtendem Eingriff miteinander gehalten werden. Der drehfeste Gleitring 3 weist an seinem äusseren Umfang eine axial sich erstreckende Nut 9 auf (es können auch mehrere derartige Nuten umfänglich verteilt vorgesehen sein), in die ein vom Mitnehmergehäuse 11 radial gegen den Gleitring 3 abstehender Mitnehmerfinger 13 hineinragt. Der drehfeste Gleitring 3 ist demzufolge zwar an einer Relativverdrehung zum Mitnehmergehäuse 11 gehindert, er kann jedoch eine axiale Relativbewegung vornehmen.

Der rotierende Gleitring 5 kann in irgendeiner geeigneten Weise auf der Welle 2 montiert sein. Bei der vorliegenden Ausführungform ist er zwischen einem Wellenabsatz und einer auf der Welle 2 aufgesetzten Buchse 8 eingeklemmt, so dass sich die Drehung der Welle 2 schlupffrei auf den Gleitring 5 übertragen lässt.

Bevorzugte Materialien für den rotierenden Gleitring 5 sind hochfeste Werkstoffe wie Siliciumkarbid (SiC), Siliciumnitrid ($Si_3N_4$), Wolframkarbid (WC) oder Titan (Ti) mit oder ohne gleitflächenseitiger Beschichtung. Höchst vorzugsweise kommt bei SiC-Materialien feinkörniges, aus der Flüssigphase gesintertes Material mit einer Korngrösse $\leq$ 1 $\mu$m zur Anwendung. Anstelle der genannten Materialien für den rotierenden Gleitring 5 kann für manche Anwendungsfälle auch ein metallisches Material wie ein Chrom-Molybdän-Edelstahl vorteilhaft sein. Der stationäre Gleitring 3 kann ebenfalls aus einem der vorgenannten Materialien gebildet sein. Zur Verschleissminimierung werden jedoch vorzugsweise tribologisch wirksame Werkstoffe wie Kohlenstoffmaterialen vorgesehen, die, wenn erwünscht, nach bekannten Verfahren antimonirnprägniert sein können.

Wie Fig. 2 zeigt, sind die gasförderwirksamen Ausnehmungen 14 in der Gleitfläche 7 des drehfesten Gleitringes 3 in grosser Anzahl in gleichem Abstand umfänglich verteilt vorgesehen. Jede gasförderwirksame Ausnehmung 14 erstreckt sich vom inneren Umfang 15 der Gleitfläche 7 pflugscharartig gekrümmt bis zu einem radialen Bereich $R_D$ der Gleitfläche 7, der in einem radialen Abstand von deren äusseren Umfang 16 steht, so dass ein Dammbereich 17 nahe dem äusseren Umfang 16 verbleibt, der frei von gasförderwirksamen Ausnehmungen 14 ist.

Das Verhältnis der von den gasförderwirksamen Ausnehmungen 14 bedeckten Fläche $F_{GFA}$ zur Gesamtfläche $F_G$ der Gleitfläche 7 ist so abgestimmt, dass sowohl bei normalem Betrieb als auch beim Anlaufen und während der Stillsetzung der Welle 2, selbst bei geringen Wellendurchmessern von z.B. 8 bis 25 mm, eine direkte Berührung zwischen den Gleitflächen 6, 7 vermieden wird, indem zwischen diesen mit Hilfe der gasförderwirksamen Ausnehmungen 14 ein Gaspolster gebildet wird. Es wurde festgestellt, dass diese Wirkungen erhalten werden, wenn das Flächenverhältnis $F_{GFA} / F_G$ im Bereich zwischen 0,35 und 0,65, vorzugsweise 0,4 und 0,6, liegt. Die radialen Abmessungen ($R_a$ -$R_i$) der Gleitfläche 7 sollten einen minimalen Betrag nicht unterschreiten. Die radialen Abmessungen ($R_a$ - $R_D$) des Dammbereiches 17 sollten dagegen minimal gehalten werden. Das Verhältnis ($R_a$ - $R_{D)}/(R_a$ -$R_i$) sollte im Bereich zwischen 0,2 und 0,3 liegen. Beispielsweise können für die Abdichtung einer Welle 2 mit einem Nenndurchmesser von z.B. 16 mm

$(R_a - R_i) = 3,5$ mm und $(R_a - R_D) = 1$ mm betragen. Längs des Umfangs einer derartigen Gleitfläche 7 können z.B. sechzehn gasförderwirksame Ausnehmungen 14 mit pflugscharartig verlaufenden voreilenden und nacheilenden Kanten vorgesehen sein.

Es wurde ferner festgestellt, dass besonders vorteilhafte Betriebseigenschaften der Gleitringdichtungsanordnung erzielt werden, wenn ein Belastungsverhältnis k, definiert als das Verhältnis einer hydraulischen, durch den Druck des abzudichtenden Mediums beaufschlagten Wirkfläche $F_H$ der Gleitringdichtungsanordnung zur Fläche $F_G$ der Gleitfläche im Bereich

$$F_H / F_G = 0,5 \text{ bis } 1,2$$

liegt, wobei

$$F_H / F_G = (R_a^2 - r_H^2) / (R_a^2 - R_i^2), \text{ wenn } p_A < p_B,$$

und

$$F_H / F_G = (R_H^2 - R_i^2) / (R_a^2 - R_i^2), \text{ wenn } p_A > p_B$$

ist.

Darin bedeuten: $R_a$ = Radius am äusseren Umfang der Gleitfläche 7, $R_i$ = Radius am inneren Umfang der Gleitfläche 7, $R_H$, $r_H$ = hydraulische Wirkradien. Der hydraulische Wirkradius unterscheidet sich je nachdem, ob der Druck $p_A$ des abzudichtenden Mediums grösser oder kleiner als der Gegendruck $p_B$, z.B. atmosphärenseitiger Druck, ist. Die Radien $R_H$ und $r_H$ sind definiert durch das Zusammenwirken des O-Ringes 4 mit benachbarten Umfangsflächen des drehfesten Gleitringes 3 bzw. des Mitnehmergehäuses 11, mit denen der O-Ring 4 unter den jeweiligen Druckverhältnissen in dichtendem Eingriff tritt, und entsprechen im wesentlichen den äusseren bzw. inneren radialen Abmessungen des O-Ringes 4.

Der Belastungsfaktor k sollte im Bereich zwischen 0,5 und 0,9, vorzugsweise 0,6 und 0,8 liegen, wenn $p_A < p_B$ ist, d.h. seitens des abzudichtenden Mediums ein Unterdruck vorliegt. Dagegen sollte das Belastungsverhältnis k zwischen 0,7 und 1,2, vorzugsweise 0,8 und 1,0 betragen, wenn $p_A > p_B$ ist, d.h. das abzudichtende Medium unter Überdruck steht.

Dass die gasförderwirksamen Ausnehmungen 14 bevorzugt vom inneren Umfang 15 der Gleitfläche 7 ausgehen sollten, hat seinen Grund darin, dass das abzudichtende Medium im Bereich A praktisch frei von nicht-gasförmigen Bestandteilen, z.B. Ölpartikeln, ist, die, wenn sie in den Dichtspalt gelangen würden, schädliche Auswirkungen auf den Betrieb der Gleitringdichtungsanordnung ausüben können. Dagegen ist der Anteil an nicht-gasförmigen Bestandteilen, z.B. Ölpartikeln, im atmosphärenseitigen gasförmigen Medium, z.B. der Luft im Raum B zwar gering, jedoch nicht vernachlässigbar, indem im Raum B geschmierte Rollenlager etc. für die Welle 2 untergebracht sein können. Die Anordnung der gasförderwirksamen Ausnehmungen 14 am inneren Umfang der Gleitfläche 7 gewährleistet eine Lekkageströmung des abzudichtenden Mediums vom Raum A längs des Dichtspaltes zwischen den Gleitflächen 6, 7 in Richtung auf den Raum B und verhindert dadurch wirksam ein Eindringen von nicht-gasförmigen Bestandteilen aus dem Raum B in den Raum A.

Aufstromseitig der Gleitringdichtungsanordnung ist im Raum B eine Einrichtung vorgesehen, die einen Zutritt von Ölpartikeln zu den Gleitflächen 6, 7 der Gleitringe 3, 5 vermeidet oder wenigstens wesentlich verringern kann. Die bevorzugte Einrichtung umfasst einen flanschartigen Bereich 12, der sich von einer das Mitnehmergehäuse 11 aussenumfänglich umfassenden Buchse 20 radial von ausserhalb des äusseren Umfanges der Gleitringe 3, 5 mittig in eine ringförmige nach aussen hin offene Ausnehmung erstreckt, die durch eine Endfläche des drehfesten Gleitringes 3 und einen scheibenförmigen Aufsatz 18 am äusseren Umfang des rotierenden Gleitringes 5 axial begrenzt ist. Durch diese Massnahmen wird eine U-förmige Strömungspassage 19 für das Medium im Raum B gebildet, die einen Einlass hat, der in einem grösseren radialen Abstand von der Mittellängsachse der Gleitringdichtungsanordnung steht als eine Strömungsumlenkstelle nahe dem freien Ende des flanschartigen Bereichs 12. Die in der Strömungspassage 19 herrschenden Fliehkräfte werden daher Ölpartikel fortlaufend zurück zum Einlass der Strömungspassage 19 schleudern und diese daran hindern, in den Bereich der Gleitflächen 6, 7 zu gelangen. Die abgeschiedenen, sich am Umfang der Gehäusebohrung absetzenden Ölpartikel können, wenn erwünscht, über eine im Gehäuse 1 vorgesehene Passage 21 nach aussen fortlaufend abgeführt werden.

Ferner können die gasförderwirksamen Ausnehmungen statt in der Gleitfläche des drehfesten auch des rotierenden Gleitrings, ggf. auch beider Gleitringen, eingebracht sein.

**Patentansprüche**

1. Gleitringdichtungsanordnung mit einem Paar zusammenwirkender Gleitringe (3, 5), von denen einer zur Montage an einem rotierenden Bauteil (2) und der andere an einem stationären Bauteil (1) vorgesehen ist, wobei die Gleitringe (3, 5) im wesentlichen radial ausgerichtete Gleitflächen (6, 7) haben, die zwischen sich bei Betrieb einen Dichtspalt zur Abdichtung eines Bereiches aussenumfänglich (B) gegenüber einem Bereich innenumfänglich (A) der Gleitflächen schaffen, und wobei wenigstens in einer der Gleitflächen (6, 7) eine Vielzahl umfänglich beabstandeter, gasförderwirksamer Ausnehmungen (14) vorgesehen ist, die sich von einem Umfang (15) in Richtung auf den anderen Umfang (16) der Gleitfläche (7) erstrecken und in einem radialen Abstand (17) vom anderen Umfang (16) enden, wobei ferner an der mit den gasförderwirksamen Ausnehmungen (14) versehenen Gleitfläche (7) ein Flächenverhältnis $F_{GFA} / F_G$ im Bereich zwischen 0,35 und 0,65, vorzugsweise 0,4 und 0,6 besteht, worin $F_{GFA}$ = auf die Gleitfläche projizierte Gesamtfläche der gasförderwirksamen Ausnehmungen, $F_G$ = Gesamtfläche der Gleitfläche bedeuten, und die gasförderwirksamen Ausnehmungen (14) vom inneren, mit dem abzudichtenden Medium beaufschlagten Umfang (15) aus in die Gleitfläche (7) eingebracht sind, **dadurch gekennzeichnet, dass** eine nicht-gasförmige Bestandteile von dem Bereich der Gleitflächen (6, 7) zurückhaltende Einrichtung aufstromseitig der dem abzudichtenden Medium abgewandten Seite (B) der Gieitringdichtungsanordnung vorgesehen ist, welche eine zwischen rotierenden und stationären Bereichen (12,18) der Gleitringdichtungsanordnung begrenzte Strömungspassage (19) mit einem Einlass umfasst, der in einem radial grösseren Abstand von der Mittenlängsachse der Gleitringdichtungsanordnung als eine Übergangsstelle der Strömungspassage zu den Gleitflächen (6,7) angeordnet ist, so daß bei Rotation des rotierenden Bauteils (2) die in der Strömungspassage (19) herrschenden Fliehkräfte die nicht-gasförmigen Bestandteile fortlaufend zurück zum Einlass der Strömungspassage schleudern.

2. Gleitringdichtungsanordnung nach Anspruch 1, **dadurch gekennzeichnet, dass** wenigstens der rotierende Gleitring aus einem Material aus der Siliciumcarbid (SiC), Siliciumnitrid ($Si_3N_4$), Wolframkarbid (WC) und Titan (Ti) umfassenden Gruppe gebildet ist.

3. Gleitringdichtungsanordnung nach Anspruch 1 oder 2, **dadurch gekennzeichnet, dass** der stationäre Gleitring aus einem Kohlenstoffmaterial gebildet ist.

4. Gleitringdichtungsanordnung nach einem der vorhergehenden Ansprüche, **dadurch gekennzeichnet, dass** ein Belastungsverhältnis k, definiert als das Verhältnis einer hydraulisch durch den Druck des abzudichtenden Mediums belasteten Wirkfläche $F_H$ der Gleitringdichtungsanordnung zur Fläche $F_G$ der Gleitfläche (7), im Bereich zwischen 0,5 und 1,2 liegt.

5. Gleitringdichtungsanordnung nach Anspruch 4, **dadurch gekennzeichnet, dass** das Belastungsverhältnis k im Bereich zwischen 0,5 und 0,9, vorzugsweise 0,6 und 0,8, bei einem abzudichtenden Druck < Gegendruck, und zwischen 0,7 und 1,2, vorzugsweise 0,8 und 1,0, bei einem abzudichtenden Druck > Gegendruck liegt.

**Claims**

1. A face seal assembly including a pair of co-operating seal rings (3,5), one of said seal rings being provided for mounting on a rotary component (2) and the other on a stationary component (1), said seal rings having substantially radially aligned seal faces (6,7) in operation providing a seal gap therebetween for sealing a zone (B) peripherally outward of the seal faces relative to a zone (A) peripherally inward thereof, a plurality of peripherally spaced recesses (14) effective for pumping a gas being provided in at least one of said seal faces (6,7), said recesses effective for pumping a gas extending from one periphery (15) of said seal face (7) towards the other periphery (16) thereof, while the inner ends of said recesses effective for pumping a gas being radially spaced at a distance (19) from the other periphery (16) of said seal face, said seal face (7) provided with said recesses effective for pumping a gas having a surface area ratio $F_{GFA} / F_G$ which is in a range between 0.35 and 0.65, preferably 0.4 and 0.6, in which $F_{GFA}$ = the total surface area of the recesses effective for pumping a gas when projected onto the seal face, $F_G$ = the total surface area of the seal face, said recesses (14) effective for pumping a gas being formed in said seal face (7) such that they originate from the inner periphery (15) of the seal face, **characterizing in that** a means for retaining non-gaseous constituents from the region of said seal face (7) is provided upstream of a side (B) of the face seal assembly remote from the medium to be sealed, said retaining means comprising a flow passage (19) defined between rotating and stationary portions (12,18) of the face seal assembly, and having an inlet disposed at a radially greater distance from a center longitudinal axis of the face seal assembly than a transition portion of the flow passage leading to the seal faces, whereby during rotation of the rotating component (2) the centrifugal forces prevailing in said flow passage (19) act to throw the non-gaseous constituents in continuous manner back to the inlet of the flow passage.

**2.** The face seal assembly according to claim 1, **characterizing in that** at least the rotary seal ring is made of a material of a group comprising silicon carbide (SiC), silicon nitride ($SI_3N_4$), tungsten carbide (WC) and titanium (Ti).

**3.** The face seal assembly according to claim 1 or 2, **characterizing in that** the stationary seal ring is made of carbon material.

**4.** The face seal assembly according to anyone of the preceding claims, **characterizing in that** a load ratio k, defined as the ratio of an effective surface area $F_H$ of the face seal assembly hydraulically loaded by the pressure of the medium to be sealed, to the surface area $F_G$ of the seal face (7), is in a range between 0.5 and 1.2.

**5.** The face seal assembly according to claim 4, **characterizing in that** said load ratio k is in a range between 0.5 and 0.9, preferably 0.6 and 0.8, for a sealing pressure < a counter pressure, and between 0.7 and 1.2, preferably 0.8 and 1.0, for a sealing pressure > a counter pressure.

**Revendications**

**1.** Garniture mécanique d'étanchéité comprenant une paire d'anneaux de glissement (3, 5) coopérant entre eux, dont l'un est prévu pour être monté sur un élément de construction en rotation (2) et l'autre sur un élément de construction fixe (1), les anneaux de glissement (3, 5) comprenant des surfaces de glissement (6, 7) orientées sensiblement radialement, qui, en situation de fonctionnement, présentent entre elles un interstice d'étanchéité destiné à étanchéifier une zone située en périphérie extérieure (B) par rapport à une zone située en périphérie intérieure (A) des surfaces de glissement, une pluralité d'orifices (14) actifs pour le transport des gaz répartis à distance les uns des autres sur la périphérie étant prévus au moins dans l'une des surfaces de glissement (6, 7), lesquels s'étendent depuis un pourtour (15) en direction de l'autre pourtour (16) de la surface de glissement (7) et se terminent à une distance radiale (17) de l'autre pourtour (16), la surface de glissement (7) pourvue des orifices (14) actifs pour le transport des gaz présentant en outre un rapport de section ou de surface $F_{GFA} / F_G$ dans la plage comprise entre 0,35 et 0,65, de préférence entre 0,4 et 0,6, où $F_{GFA}$ correspond à la surface totale des orifices actifs pour le transport des gaz projetée sur la surface de glissement et où $F_G$ correspond à la surface totale de la surface de glissement, et où les orifices (14) actifs pour le transport des gaz sont ménagés depuis l'intérieur du pourtour (15) sous contrainte du milieu à étanchéifier jusque dans la surface de glissement (7), **caractérisée en ce qu'**un dispositif retenant les composants non gazeux provenant de la zone des surfaces de glissement (6, 7) est prévu en amont, du côté (B) de la garniture mécanique d'étanchéité opposé au milieu à étanchéifier, qui comprend un passage d'écoulement (19) circonscrit entre les zones en rotation et les zones fixes (12, 18) de la garniture mécanique d'étanchéité et pourvu d'une entrée qui est disposée à plus grande distance radiale de l'axe longitudinal médian de la garniture mécanique d'étanchéité que le site de transition du passage d'écoulement vers les surfaces de glissement (6, 7), de telle sorte que lorsque l'élément de construction (2) est en rotation, les forces centrifuges qui règnent dans le passage d'écoulement (19) projettent sans cesse ou de manière continue les composants non gazeux en arrière, vers l'entrée du passage d'écoulement (19).

**2.** Garniture mécanique d'étanchéité selon la revendication 1, **caractérisée en ce qu'**au moins l'anneau de glissement en rotation est fabriqué dans un matériau choisi dans le groupe constitué par le carbure de silicium (SiC), le nitrure de silicium ($Si_3N_4$), le carbure de tungstène (WC) et le titane (Ti).

**3.** Garniture mécanique d'étanchéité selon la revendication 1 ou 2, **caractérisée en ce que** l'anneau de glissement fixe est constitué d'un matériau carboné.

**4.** Garniture mécanique d'étanchéité selon l'une quelconque des revendications précédentes, **caractérisée en ce que** le rapport de charge k, défini comme étant le rapport entre une surface active $F_H$ de la garniture mécanique d'étanchéité hydrauliquement sous contrainte de pression par le milieu à étanchéifier et la surface $F_G$ de la surface de glissement (7), est compris dans la plage de 0,5 à 1,2,

**5.** Garniture mécanique d'étanchéité selon la revendication 4, **caractérisée en ce que** le rapport de charge k est compris dans la plage de 0,5 à 0,9 de préférence de 0,6 à 0,8, pour une pression à étanchéifier inférieure à la contre-pression et dans la plage de 0,7 à 1,2, de préférence de 0,8 à 1,0 pour une pression à étanchéifier supérieure à la contre-pression.

# FIG.1

# FIG.2